# EUROPÄISCHE PATENTSCHRIFT

(11) **EP 0 344 659 B1**
(45) Veröffentlichungstag und Bekanntmachung des Hinweises auf die Patenterteilung: **28.07.1993**
(21) Anmeldenummer: 89109591.1
(22) Anmeldetag: 27.05.1989
(51) Int. Cl.: C08F 220/18, C09D 133/06

(54) **Dispersionen von nicht-tertiären Butyl(meth)acrylatcopolymerisaten mit Glastemperaturen unter -10 Grad C**
Dispersions of non-tertiary butyl (meth)acrylate copolymers with a glass transition temperature lower than 10 degrees centigrade below zero
Dispersions de copolymères de (meth)acrylate de butyle non tertiaire à température de transition vitreuse en dessous de -10 degrés C

(30) Priorität: 03.06.1988 DE 3818869
(43) Veröffentlichungstag der Anmeldung: 06.12.1989
(73) Patentinhaber: BASF Aktiengesellschaft, 67063 Ludwigshafen (DE)
(72) Erfinder: Pfoehler, Peter, Dr., D-6720 Speyer (DE); Seyffer, Hermann, Dr., D-6900 Heidelberg (DE); Vietmeier, Jürgen, Dr., D-6706 Wachenheim (DE); Tuerk, Johannes, D-6737 Boehl-Iggelheim (DE); Druschke, Wolfgang, Dr., D-6716 Dirmstein (DE); Schagerer, Klaus, Dr., D-6718 Grünstadt (DE)

(56) Entgegenhaltungen:
- US-A- 4 371 659
- CHEMICAL ABSTRACTS, Band 100, Nr. 6, Februar 1984, Seite 44, Nr. 35472n, Columbus, Ohio, US

## Beschreibung

Zur Herstellung selbstklebender Artikel werden immer mehr Haftkleber aus synthetisch hergestellten Rohstoffen eingesetzt. Als Trägermaterial zur Herstellung solcher selbstklebender Artikel sind u.a. Papier sowie Folien aus Metall, Polyethylen, Polypropylen, Polyethylenglycolterephthalat oder PVC geeignet.

Für die Herstellung selbstklebender Artikel für Anwendungen auf polyolefinischen Oberflächen werden bis jetzt in der Praxis meist Haftkleber-Lösungen auf Basis von Natur- oder Synthesekautschuk eingesetzt, die mit Weichharzen und/oder Weichmachern modifiziert sind und die einen weichen, stark klebrigen Film bilden. Als Lösungsmittel werden z.B. Benzin, Toluol, Aceton und/oder Ethylacetat eingesetzt. Die Herstellung solcher Kleberlösungen auf Kautschukbasis ist technisch aufwendig, da beispielsweise die Naturkautschukanteile auf Walzstühlen oder Knetern mastifiziert und die Elastomeren unter Verwendung von Löseknetern oder Dissolvern in den organischen Lösungsmitteln gelöst werden müssen. Zudem handelt es sich um brennbare Lösungsmittel, so daß bei der Verwendung der Klebstoff-Lösungen explosionsgeschützte Beschichtungsanlagen und Lösungsmittelrückgewinnungsanlagen erforderlich sind. Weitere Nachteile dieser Klebstoffe sind ihre geringe Alterungsbeständigkeit, schnelles Vergrauen der Etikettenoberflächen durch Weichmacher-Migration und Störungen beim Drucken und Stanzen der Etiketten durch Fadenziehen des Klebers.

Die bei der Verarbeitung von lösungsmittelhaltigen Klebern entstehenden Nachteile, können häufig durch den Einsatz wäßriger Polymer-Dispersionen, insbesonders Polyacrylatdispersionen, vermieden werden. Deshalb werden wäßrige Haftkleberdispersionen mehr und mehr zur Herstellung von selbstklebenden Artikeln, auch mit polyolefinischen Trägern, eingesetzt.

Solche Dispersionen, insbesonders üblicher weicher und klebriger Acrylatcopolymerer mit Glastemperaturen unter -10°C, wie sie z.B. aus der US-PS-4371659 oder der DE-A-2459160 bekannt sind, bringen zwar auf polaren Oberflächen eine gute bis ausgezeichnete Haftung, nicht jedoch auf unpolaren Oberflächen, wie sie Polyolefine aufweisen. Zwar kann dieses Problem für den Klebstoffträger in den meisten Fällen durch technisch an sich bekannte Maßnahmen, z.B. Corana-Entladungs-Vorbehandlung, Beflammung oder chemische Vorbehandlung beseitigt werden, doch ist dies für eine z.B. mit einem Klebeetikett zu beklebende, unpolare Oberfläche praktisch nicht möglich. Die Folge ist eine im allgemeinen schlechte Haftung des selbstklebenden Artikels auf unpolaren Oberflächen.

Eine weitere Möglichkeit, die Haftung auf polyolefinischen Klebstoffträgern zu verbessern, besteht in der Verwendung von Polyacrylat-Dispersionen, die ein Carbonylgruppen enthaltendes Comonomer und wasserlösliche Dihydrazinverbindungen enthalten, wie sie aus der DE-A-3319240 bekannt sind. Die so erhaltenen Haftkleberdispersionen und die aus ihnen hergestellten selbstklebenden Artikel zeichnen sich zwar durch eine hervorragende Haftung der Haftkleberschicht auf dem Träger aus, die Schälfestigkeit des selbstklebenden Artikels ist jedoch - bei hoher Scherfestigkeit - nur gering, insbesonders auf Polyolefin-Oberflächen.

Obgleich Abmischen der Haftkleberdispersion mit Weichharz-Dispersionen (Klebrigmachern) die Klebrigkeit gegenüber Polyethylen etwas verbessert, ist die Haftung derartiger Dispersionen auf Polyethylen nicht ausreichend. Die Haftung auf polyolefinischen Oberflächen ist auch in Abmischung mit Harzdispersionen immer dann besonders schlecht, wenn die verwendete Polyacrylat-Dispersion sich von überwiegenden Anteilen monomerer Acrylester von Alkanolen mit weniger als 8 C-Atomen ableitet.

Es wurde nun gefunden, daß 40 bis 70 %ige wäßrige Dispersionen von nicht-tertiären Butyl(meth)acrylat-Copolymerisaten, mit Glastemperaturen unter -10°C, die übliche anionische und ggf. zusätzlich nichtionische Emulgatoren enthalten besonders gute Klebeeigenschaften haben, wenn die Copolymerisate aus
(a) 70 bis 85 % ihres Gewichts an nicht-tertiären Butyl(meth)acrylaten.
(b) 8 bis 27,2 % ihres Gewichts an (Meth)acrylaten (A) deren Homopolymerisate eine Glastemperatur über der des Polybutyl(meth)acrylats bis 0°C und (Meth)acrlyaten (B), deren Homopolymerisate eine Glastemperatur unter der des Polybutyl(meth)acrylats haben, wobei das Gewichtsverhältnis der (Meth)acrylate (A) zu den (Meth)acrylaten (B) von 3 : 1 bis 1 : 3 beträgt,
(c) 2 bis 15 % ihres Gewichts an Methacrylsäuremethylester, Styrol und/oder Acrylnitril und
(d) 0,8 bis 5 % ihres Gewichts an 3 bis 5 C-Atome enthaltenden monoolefinisch ungesättigten Mono- und/oder Dicarbonsäuren und/oder deren ggf. an den Stickstoffatomen durch 1 bis 4 C-Atome enthaltende Alkyl- und/oder Alkylolreste substituierten Amiden und/oder Hydroxialkyl(meth)acrylaten mit 2 bis 5 C-Atomen in den Alkylgruppen
einpolymerisiert enthalten.

Die neuen Poly(meth)acrylat-Dispersionen eignen sich besonders für das Beschichten von flächigen Substraten, z.B. von Papier- und Kunststoff-Etiketten. Nach Modifizieren mit Harz-Dispersionen besitzen die aus den Gemischen hergestellten Filme eine sehr gute Schälfestigkeit und hohen Tack auf praktisch allen, auch polyolefinischen Materialien sowie eine gute Kohäsion. Die Copolymerisation von derartigen Monomeren, deren Homopolymerisate verschiedene Glastemperaturen haben, bewirkt eine überraschend gute Haftung auf Polyolefin-Oberflächen. Dies ist ein Vorteil im Vergleich zu den bekannten Haftklebern für Etiketten.

Insbesonders das sogenannte "schnelle Anfassen" auf Polyethylen, das zu einem sofortigen Haften des selbstklebenden Artikels auf Polyethylen, auch nach sehr kurzer Kontaktzeit, führt, ist sehr gut.

Die neuen wäßrigen Butyl(meth)acrylat-Copolymerisat-Dispersionen können in an sich üblicher Weise durch Copolymerisation der Monomeren in wäßriger Emulsion unter Verwendung der üblichen Emulgier- und Dispergierhilfsmittel hergestellt sein und haben eine Konzentration von 40 bis 70 Gew.% an Copolymerem, vorzugsweise von 55 bis 65 Gew.%. Als Emulgier- und Dispergierhilfsmittel enthalten sie meist 0,2 bis 3 Gew.%, vorzugsweise 0,8 bis 1,5 Gew.%, bezogen auf die Menge des Copolymeren, anionische und gegebenenfalls zusätzlich nichtionische Emulgatoren, wie Natriumdialkylsulfosuccinate, Natriumsalze von sulfatierten Ölen, Natriumsalze von Alkylsulfonsäuren, Natrium-, Kalium- und Ammoniumalkylsulfate, Alkalisalze von Sulfonsäuren, Alkalisalze von oxalkylierten C₁₂- bis C₂₄-Fettalkoholen und von oxalkylierten Alkylphenolen sowie Polyadditionsprodukte von Alkylenoxiden, wie Ethylenoxid und/oder Propylenoxid an Fettsäuren, Fettalkohole, Fettamide und/oder Alkylphenole mit meist 10 bis 50 Alkylenoxid-, insbesondere Ethylenoxidresten, ferner Natriumsalze von Fettsäuren wie Natriumstearat und Natriumoleat.

Die wäßrigen Dispersionen der beanspruchten Art können nach den üblichen Verfahren der Emulsionspolymerisation chargenweise oder kontinuierlich durch Copolymerisation der Monomeren in wäßriger Emulsion hergestellt werden. Dabei können die üblichen wasserlöslichen radikalbildenden Polymerisationsinitiatoren, wie besonders Peroxide, z.B. Natrium-, Kalium- und Ammoniumperoxid, Wasserstoffperoxid sowie Perborate in an sich üblichen Mengen, im allgemeinen von 0,05 bis 1, vorzugsweise von 0,2 bis 0,5 Gew.%, bezogen auf die Monomeren, mitverwendet werden. Die Polymerisation wird im allgemeinen bei Temperaturen von 50 bis 100°C, vorzugsweise bei 80 bis 95°C, durchgeführt.

Bei Mitverwendung eines reduzierenden Co-Initiators, wie Ascorbinsäure oder besonders Natrium-Formaldehydsulfoxylat, kann die Emulsionspolymerisation bei 40 bis 60°C durchgeführt werden.

Es können bei der Herstellung der beanspruchten Copolymeren auch reduzierend wirkende Regler mitverwendet werden, wobei die Menge an Regler 0,01 bis 0,1 Gew.%, bezogen auf das Copolymerisat, betragen kann. Geeignete Regler sind beispielsweise Mercaptane, wie tert.-Butylmercaptan und Dodecylmercaptan.

Besonders bewährt für die Herstellung der neuen Dispersionen hat sich das Zulauf-Verfahren, bei dem ein Teil der Monomeren, im allgemeinen 1 bis 10 Gew.% in einer Wasser, Emulgator und Polymerisationsinitiator enthaltenden Vorlage vorgelegt und der Rest der Monomeren sowie der Regler bei Polymerisationstemperatur nach Maßgabe der Polymerisation in emulgierter Form sowie zusätzlich eine wäßrige Lösung weiteren Polymerisationsinitiators zugefahren wird. Dabei kann die Zusammensetzung des Monomerengemischs der Vorlage gleich oder verschieden sein von der Monomerenzusammensetzung des Zulaufs.

Die beanspruchten Copolymeren haben eine Glastemperatur von unter -10°C, wobei die Glastemperatur nach üblichen Methoden, z.B. aus der Messung des E-Moduls im Zug-, Biege- und Druckversuch nach DIN 53457 als Funktion der Temperatur oder durch Differentialthermoanalyse bestimmt sein kann.

Als Hauptmonomere (a) enthalten die Copolymerisate der neuen Dispersionen n-Butylacrylat, Isobutylacrylat und/oder Isobutylmethacrylat einpolymerisiert.

Die Monomeren (b) ergeben zum Teil Homopolymerisate einer Glastemperatur, die über der Glastemperatur des verwendeten Monomeren (a) bis 0°C liegt [(Meth)acrylate (A)], wenn man sie für sich polymerisiert, und zum anderen Teil Homopolymerisate, deren Glastemperatur unter der Glastemperatur des Homopolymerisats aus dem verwendeten Monomeren (a) liegt [(Meth)acrylate (B)], dabei ist ein Gewichtsverhältnis der (Meth)acrylate (A) zu den (Meth)acrylaten (B) von 3 : 1 bis 1 : 3, insbesondere etwa gleiche Mengen an den (Meth)acrylaten (A) und den (Meth)acrylaten (B) von besonderem Interesse. Als (Meth)acrylate (A) kommen vor allem Ethylacrylat, als (Meth)acrylate (B) vor allem 2-Ethylhexylacrylat und n-Octylacrylat und n-Octylmethacrylat in Frage.

Von den Monomeren (c) wird für die Herstellung der neuen Copolymerisat-Dispersionen Methacrylsäuremethylester vorgezogen, wobei Anteile von 3 bis 7 Gew.%, bezogen auf das Copolymerisat, von besonderem Interesse sind.

Als Monomere (d) seien vor allem Acrylsäure, Methacrylsäure, Itakonsäure, Fumarsäure, Maleinsäure, Acrylamid, Methacrylamid, N-Methylacrylamid und -methacrylamid, N-Isopropyl-acrylamid, N-n-Butyl-methacrylamid, N-Methylolacrylamid und -methacrylamid, 2-Hydroxyethylacrylat, 2-Hydroxypropylacrylat und 4-Hydroxy-butylacrylat in Frage. Von besonderem Interesse als Monomere (d) sind Acryl- und Methacrylsäure gegebenenfalls im Gemisch mit deren Amiden.

Als Zusätze können die neuen Haftkleberdispersionen z.B. übliche Mengen an Verdickungsmitteln, Weichmachern, klebrigmachenden Harzen und/oder Pigmenten enthalten. Die Haftkleber können ein- oder zweiseitig auf die Substrate in an sich üblicher Weise, z.B. durch Spritzen, Rakeln, Rollen, Gießen, Walzen oder Tauchen aufgetragen werden. Auch ein indirekter Auftrag der Haftkleber, z.B. nach dem Transferverfahren unter Mitverwendung eines siliconisierten Papiers ist möglich. Nach dem Auftrag der Kleber werden die beschichteten Substrate in üblicher Weise getrocknet.

Die neuen Butyl(meth)acrylat-Copolymerisat-Dispersionen können für die Herstellung von Klebeetiketten oder anderen selbstklebenden Artikeln verwendet werden. Als Träger kommen Folien aus Polyethylen, Polypropylen, Polyethylenglykolterephthalat, PVC und Metall sowie Papier in Betracht.

In den folgenden Beispielen werden zur Prüfung der anwendungstechnischen Eigenschaften die Dispersionen oder ihre Abmischungen mit einem Auftragsgewicht von etwa 20 g/m² auf handelsübliche Polyesterfolie (Dicke 35 µm) gerakelt und die beschichteten Folien 3 Minuten bei 90°C im Umluft-Trockenschrank getrocknet. Die beschichteten Folien werden mit einem silikonisierten Schutzpapier abgedeckt und dann in 2 cm breite Prüfstreifen geschnitten.

Zur Bestimmung der Scherfestigkeit werden die Klebestreifen in 2,5 cm Länge auf ein V2A-Prüfblech geklebt, 24 Stunden gelagert und anschließend im Hängen mit einem 1 kg-Gewicht belastet. Das Maß für die Scherfestigkeit ist die Zeit bis zum Abfallen des Gewichts; man verwendet dabei den Durchschnitt aus 5 Messungen. Bei dieser Prüfung soll möglichst die Klebeschicht zerstört werden (Kohäsionsbruch). Die Prüfung wird bei Raumtemperatur (23°C, 50 % rel. Luftfeuchte) und bei 50°C (Umluft-Trockenschrank) durchgeführt.

Bei der Bestimmung der Schälfestigkeit wird der Klebestreifen auf einem V2A-Prüfblech verklebt, gegebenenfalls gelagert und in einer Zug-Dehnungs-Prüfapparatur bei 23°C im Winkel von 180°C mit einer Geschwindigkeit von 75 mm/Minute abgezogen. DAs Maß der Schälfestigkeit ist die Kraft in N, die sich als Durchschnittswert aus 5 Prüfungen ergibt. Die Klebeschicht soll beim Schältest nicht zerstört werden und sich vollständig vom Substrat ablösen (Adhäsionsbruch).

Bei der Bestimmung des Schlingenwertes wird ein Klebestreifen mit beiden Enden so in die oberen Backen der Zug-Dehnung-Prüfapparatur eingespannt, daß er eine Schlinge mit der beschichteten Seite nach außen bildet. Diese Schlinge wird mit 300 mm/Minute gegen die Prüffläche (V2A oder Polyethylen) gefahren, bis die Schlinge unter ihrem eigenen Gewicht auf der Prüffläche aufliegt. Dann wird die aufliegende Schlinge mit 300 mm/Minute wieder abgezogen. Das Maß für den Schlingenwert ist die Kraft in N, die sich als Durchschnittswert aus 5 Messungen ergibt. Die Klebeschicht soll beim Test des Schlingenwertes nicht zerstört werden und sich vollständig vom Substrat ablösen (Adhäsionsbruch).

Die Bestimmung des "Anfassens" auf Polyethylen erfolgt durch qualitative Bewertung des Anfassens eines Klebestreifens, der, zur Schlinge geformt, von Hand schnell gegen eine Polyethylen-Unterlage geführt wird, so daß - analog zur Prüfung des Schlingenwertes - der Klebestreifen mit seinem eigenen Gewicht auf der Prüffläche aufliegt und dann wieder abgezogen wird. Die Noten der Bewertung bedeuten im einzelnen:
- 4 =: keine Klebkraft zum Untergrund
- 3 =: sehr geringe Klebkraft zum Untergrund
- 2 =: gute Klebkraft zum Untergrund, der Streifen klebt mit dem größten Teil der aufliegenden Fläche auf der Prüffläche
- 1 =: sehr gute Klebkraft, der Streifen klebt mit der gesamten Fläche auf der Prüffläche

Die in den folgenden Beispielen angegebenen Teile und Prozente beziehen sich auf das Gewicht.

### Herstellung der Polymer-Dispersionen

In einem Reaktionsgefäß mit Rührer und 2 Zulaufgefäßen werden 150 Teile Wasser vorgelegt. Ein Zulaufgefäß 1 mit Rührer enthält 600 Teile Monomere gemäß Tabelle 1, emulgiert in 150 Teilen Wasser (Zulauf 1). Als Emulgator werden 1 % Natriumsulfobernsteinsäuredi(ethylhexyl)ester (bez. auf die Monomeren) verwendet.

Ein zweites Zulaufgefäß enthält 0,3 % (bez. auf die Monomeren) Natriumperoxodisulfat (Beispiele 1-3) bzw. Kaliumperoxodisulfat (Beispiele 4-6) in 100 Teilen Wasser (Zulauf 2).

Die Vorlage wird auf 85°C erhitzt und 1 % des Zulaufs 1 sowie 20 % des Zulaufs 2 unter Rühren zugegeben. Nach 15 Minuten Anpolymerisieren werden die beiden Zuläufe während 3 Stunden zugegeben. Dabei kann die Zugabegeschwindigkeit der einzelnen Zuläufe innerhalb der Zugabezeit verändert werden. Bei 85°C wird noch etwa 1 Stunde nachpolymerisiert und dann abgekühlt. Anschließend wird z.B. mit einer 25 %igen Ammoniaklösung, neutralisiert.

**Tabelle 1**

| Beispiele 1 bis 6 und Vergleichsversuche a bis d | | | | | | | |
|---|---|---|---|---|---|---|---|
| Beispiel Nr. | Monomerzusammensetzung (Gew.%) | | | | | | |
| | BA | EHA | EA | MMA | MA | S | AS |
| 1 | 80 | 6 | 3 | 9 | - | - | 2 |
| 2 | 85 | 5 | 7 | 2 | - | - | 1 |
| 3 | 70 | 9 | 9 | - | 6 | 5 | 1 |
| 4 | 83 | 5 | 6 | 4 | - | - | 2 |
| 5 | 77 | 4 | 10 | 8 | - | - | 1 |
| 6 | 82 | 7 | 4 | - | - | 6 | 1 |

| Vergleichsversuche | | | | | | | |
|---|---|---|---|---|---|---|---|
| a | 96 | 2 | - | 1 | - | - | 1 |
| b | 96 | 2 | - | 2 | - | - | - |
| c | 60 | 9 | 20 | - | - | 10 | 1 |
| d | 10 | 78 | 1,5 | 8 | - | 2 | 0,5 |
| BA = n-Butylacrylat | | | | | | | |
| EHA = Ethylhexylacrylat | | | | | | | |
| EA = Ethylacrylat | | | | | | | |
| MMA = Methylmethacrylat | | | | | | | |
| MA = Methylacrylat | | | | | | | |
| S = Styrol | | | | | | | |
| AS = Acrylsäure | | | | | | | |

**Tabelle 2**

| Anwendungstechnische Prüfung der Diospersionen aus Tabelle 1 | | | | | |
|---|---|---|---|---|---|
| Beispiel Nr. | Schälfestigkeit sofort (N/2 cm) | Kohäsion (RT) (min) | Schlingenwert auf Stahl (N/2 cm) | Schlingenwert auf Polyethylen (N/2 cm) | Anfassen auf Polyethylen |
| 1 | 11,7 | 482 | 9,1 A/K | 2,3 A | 2 |
| 2 | 10,8 A/K | 413 | 8,9 A | 1,9 A | 2-3 |
| 3 | 8,9 A | 673 | 6,7 A | 2,0 A | 3 |
| 4 | 12,5 | 294 | 11,4 | 2,5 A | 2 |
| 5 | 11,9 | 286 | 10,8 | 1,8 A | 2-3 |
| 6 | 8,5 A | 738 | 6,3 A | 2,1 A | 2 |

| Vergleichsversuch | | | | | |
|---|---|---|---|---|---|
| a | 5,2 A | 1517 | 6,1 A | 0,9 A | 4 |
| b | 5,4 A | 1395 | 6,2 A | 0,7 A | 3-4 |
| c | 4,9 A | 320 | 5,2 A | 1,3 A | 3-4 |
| d | 11,1 A | 91 | 5,3 A | 1,8 A | 3 |
| Bruchbild (wenn nicht anders angegeben): Kohäsionsbruch | | | | | |
| A = Adhäsionsbruch | | | | | |
| A/K = kein eindeutiges Bruchbild | | | | | |

**Tabelle 3**

| Anwendungstechnische Prüfung der Dispersionen aus Tabelle 1 in Abmischung mit Weichharzdispersion (®Snowtack 301 CF; Polymer/Harz = 2/1 f/f): | | | | | |
|---|---|---|---|---|---|
| Beispiel Nr. | Schälfestigkeit sofort (N/2 cm) | Kohäsion (min) | Schlingenwert auf Stahl (N/2 cm) | Schlingenwert auf Polyethylen (N/2 cm) | Anfassen auf Polyethylen |
| 1 | 15,1 | 176 | 13,8 A/K | 4,4 A | 1-2 |
| 2 | 14,8 A/K | 185 | 13,1 A | 4,1 A | 2 |
| 3 | 12,1 A | 227 | 7,0 A | 2,9 A | 2 |
| 4 | 16,2 | 150 | 15,1 | 4,8 A | 1-2 |
| 5 | 15,8 | 147 | 13,7 | 3,4 A | 1-2 |
| 6 | 11,7 A/K | 243 | 9,7 A | 4,4 A | 1-2 |

| Vergleichsversuch | | | | | |
|---|---|---|---|---|---|
| a | 8,3 A | 925 | 8,9 A | 2,1 A | 3 |
| b | 8,2 A | 812 | 9,0 A | 1,9 A | 2-3 |
| c | 7,3 A | 197 | 6,5 A | 1,7 A | 3 |
| d | 13,9 A | 28 | 8,8 A | 2,2 A | 2-3 |
| Bruchbild (wenn nicht anders angegeben): Kohäsionsbruch | | | | | |
| A = Adhäsionsbruch | | | | | |
| A/K = kein eindeutiges Bruchbild | | | | | |

## Patentansprüche

1. 40 bis 70 %ige wäßrige Dispersionen von nicht-tertiären Butyl(meth)acrylat-Copolymerisaten mit Glastemperaturen unter -10°C, die übliche anionische und gegebenenfalls zusätzlich nichtionische Emulgatoren enthalten, dadurch gekennzeichnet, daß die Copolymerisate
(a) 70 bis 85 % ihres Gewichts an nicht-tertiären Butyl(meth)acrylaten,
(b) 8 bis 27,2 % ihres Gewichts an (Meth)acrylaten (A), deren Homopolymerisate eine Glastemperatur über der des Polybutyl(meth)acrylats bis 0°C und (Meth)acrylaten (B), deren Homopolymerisate eine Glastemperatur unter der des Polybutyl(meth)acrylats haben, wobei das Gewichtsverhältnis der (Meth)acrylate (A): den (Meth)acrylaten (B) von 3 : 1 bis 1 : 3 beträgt,
(c) 2 bis 15 % ihres Gewichts an Methacrylsäuremethylester, Styrol und/oder Acrylnitril und
(d) 0,8 bis 5 % ihres Gewichts an 3 bis 5 C-Atome enthaltenden monoolefinisch ungesättigten Mono- und/oder Dicarbonsäuren und/oder deren gegebenenfalls an den Stickstoffatomen durch 1 bis 4 C-Atome enthaltenden Alkyl- und/oder Alkylolreste substituierten Amiden und/oder Hydroxialkyl(meth)acrylaten mit 2 bis 5 C-Atomen in den Alkylgruppen
einpolymerisiert enthalten.

2. Verwendung der wäßrigen Butyl(meth)acrylatcopolymerisat-Dispersionen zum Beschichten von flächigen Substraten.

## Claims

1. A 40-70% strength aqueous dispersion of non-tertiary butyl (meth)acrylate copolymers having glass transition temperatures of less than -10°C, which contain conventional anionic and, if required, also nonionic emulsifiers, wherein the copolymers contain, as copolymerized units,
(a) from 70 to 85% by weight of nontertiary butyl (meth)acrylates,
(b) from 8 to 27.2% by weight of (meth)acrylates (A) whose homopolymers have a glass transition temperature greater than that of the polybutyl (meth)acrylate up to 0°C and (meth)acrylates (B) whose homopolymers have a glass transition temperature below that of the polybutyl (meth)acrylate, the weight ratio of (meth)acrylates (A) to the (meth)acrylates (B) being from 3 : 1 to 1 : 3,
(c) from 2 to 15% by weight of methyl methacrylate, styrene and/or acrylonitrile and
(d) from 0.8 to 5% by weight of monoolefinically unsaturated mono- and/or dicarboxylic acids of 3 to 5 carbon atoms and/or their amides which are unsubstituted or substituted at the nitrogen atoms by alkyl and/or alkylol radicals of 1 to 4 carbon atoms and/or hydroxyalkyl (meth) acrylates where the alkyl groups are of 2 to 5 carbon atoms.

2. Use of an aqueous butyl (meth)acrylate copolymer dispersion for coating sheet-like substrates.

## Revendications

1. Dispersions aqueuses à 40-70% de copolymères de (méth)acrylate de butyle, non tertiaires, avec des températures de transition vitreuse inférieures à -10°C, qui contiennent des émulsifs anioniques usuels et éventuellement complémentairement des émulsifs non ioniques, caractérisées en ce que les copolymères contiennent, incorporés par polymérisation,
(a) 70 à 85% de leur poids de (méth)acrylates de butyle non tertiaires,
(b) 8 à 27,2% de leur poids de (méth)acrylates (A) dont les homopolymères possèdent une température de transition vitreuse supérieure à celle du [poly(méth)acrylate de butyle] à 0°C et de (méth)acrylates (B) dont les homopolymères possèdent une température de transition vitreuse inférieure à celle du poly[(méth)acrylate de butyle], où le rapport pondéral des (méth)acrylates ( A) aux (méth)acrylates (B) varie de 3:1 à 1:3,
(c) 2 à 15% de leur poids de méthacrylate de méthyle, de styrène et/ou d'acrylonitrile et
(d) 0,8 à 5% de leur poids d'acides mono- et/ou dicarboxyliques contenant de 3 à 5 atomes de carbone et (d) monooléfiniquement insaturés et/ou leurs amides éventuellement substitués sur les atomes d'azote par des radicaux alkylol et/ou alkyle contenant de 1 à 4 atomes de carbone et/ou de (méth)acrylates d'hydroxyalkyle dont les radicaux alkyle comportent de 2 à 5 atomes de carbone.

2. Utilisation des dispersions aqueuses de copolymère de (méth)acrylate de butyle pour le revêtement de subjectiles plats ou plans.
